# EUROPEAN PATENT APPLICATION

(11) **EP 4 745 919 A1**
(43) Date of publication of application: **20.05.2026**
(21) Application number: 24213269.4
(22) Date of filing: 15.11.2024
(51) Int. Cl.: G06V 20/56, G06V 20/64

(54) **DISABLEMENT OF PERCEPTION SENSOR AND/OR VEHICLE FUNCTION**

(71) Applicant: Volvo Truck Corporation, 405 08 Göteborg (SE)
(72) Inventor: BRUN, Arnaud, 69007 Lyon (FR); QUIBRIAC, Yann, 69007 Lyon (FR); SEVENIER, Fanette, 69690 Courzieu (FR)
(74) Representative: Zacco Sweden AB

(57) **Abstract**

A computer system comprising processing circuitry configured to: detect, using a camera onboard a vehicle, equipment mounted to the vehicle; determine that the detected equipment is within a field of view of at least one perception sensor onboard the vehicle; and in response to determining that the detected equipment is within the field of view of the at least one perception sensor, disable at least one of the at least one perception sensor and a vehicle function associated with the at least one perception sensor.

## Description

### TECHNICAL FIELD

The disclosure relates generally to a computer system and to a computer-implemented method. In particular aspects, the disclosure relates to disablement of at least one perception sensor and/or an associated vehicle function when equipment is mounted on a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Bodybuilder equipment is a type of equipment that can be mounted to and/or unmounted from a vehicle such as a heavy-duty vehicle. The bodybuilder equipment can for example be a snow plough, a crane, a garbage container loader, an excavator arm and bucket, a sweeper roller, etc. However, bodybuilder equipment when mounted on the vehicle may impair vehicle functions such as driver assistance functions that rely on onboard reception sensors such as radar. Hence, the driver assistance functions may have to be manually disabled.

### SUMMARY

According to a first aspect of the disclosure, there is provided a computer system comprising processing circuitry configured to: detect, using a camera onboard a vehicle, equipment mounted to the vehicle; determine that the detected equipment is within a field of view of at least one perception sensor onboard the vehicle; and in response to determining that the detected equipment is within the field of view of the at least one perception sensor, disable at least one of the at least one perception sensor and a vehicle function associated with the at least one perception sensor. The first aspect of the disclosure may seek to facilitate disablement of the at least one perception sensor and/or associated vehicle function when equipment is mounted on the vehicle. A technical benefit may include that the at least one perception sensor and/or associated vehicle function may be automatically disabled when equipment is mounted on the vehicle. By disabling the at least one perception sensor, energy may be saved. By disabling the vehicle function associated with the at least one perception sensor, impaired behaviour may be avoided.

Optionally in some examples, including in at least one preferred example, to detect equipment mounted to the vehicle, the processing circuitry may further be configured to recognize the equipment mounted to the vehicle. A technical benefit may include that the equipment confidently may be detected/recognized.

Optionally in some examples, including in at least one preferred example, to detect equipment mounted to the vehicle, the processing circuitry may further be configured to persistently detect the equipment mounted to the vehicle for a predetermined amount of time. A technical benefit may include that the equipment may be detected without having to specifically recognize the equipment.

Optionally in some examples, including in at least one preferred example, to determine that the detected equipment is within a field of view of at least one perception sensor onboard the vehicle, the processing circuitry may further be configured to: compare a current image area occupied by the detected equipment in at least one image from the camera with a predetermined image area; and determine that said area current image matches said predetermined image area. A technical benefit may include that a conventional camera, for example an existing camera on the vehicle, can be used. Alternatively, the processing circuitry could determine that the detected equipment is within the field of view of the at least one perception sensor onboard the vehicle by using computer stereo vision (e.g. the camera may be a stereo camera or two separate cameras to provide depth data) and knowing the field of view of the at least one sensor (e.g. the nominal field of view of the at least one perception sensor in combination with the position and orientation of the at least one perception sensor onboard the vehicle), for example.

Optionally in some examples, including in at least one preferred example, the processing circuitry may further be configured to: in response to determining that said current image area matches said predetermined image area, determine that the detected equipment is within the field of view of the at least one perception sensor. The processing circuitry may further be configured to: in response to determining that said current image area does not match any predetermined image area (where the equipment is known to interfere with the at least one perception sensor), determine that the detected equipment is not within the field of view of the at least one perception sensor.

Optionally in some examples, including in at least one preferred example, the processing circuitry may further be configured to: enter a learning phase with the equipment mounted to the vehicle; in the learning phase, monitor input from the at least one perception sensor; determine based on the monitored input that the at least one perception sensor is detecting an object; and determine an occupied area occupied by the equipment in at least one camera image. A technical benefit may include that no manual setup may be needed.

Optionally in some examples, including in at least one preferred example, the processing circuitry may further be configured to: cause the equipment to move between at least two different positions relative to the vehicle; and determine from the monitored input that the at least one perception sensor is detecting an object for each of the at least two different positions. A technical benefit may include that the at least one perception sensor and/or associated vehicle function may be disabled when the equipment is in a certain position.

Optionally in some examples, including in at least one preferred example, said equipment may be first equipment, wherein the processing circuitry may further be configured to: detect, using the camera onboard the vehicle, second equipment mounted to the vehicle, wherein the second equipment is different from the first equipment; and determine that the detected second equipment is within the field of view of the at least one perception sensor onboard the vehicle based on a predetermined image area where the first equipment is known to interfere with the at least one perception sensor onboard the vehicle. A technical benefit may include that the learning phase does not have to execute/perform for the second equipment.

Optionally in some examples, including in at least one preferred example, the processing circuitry may further be configured to: in response to determining that the equipment is no longer within the field of view of the at least one perception sensor, enable at least one of the disabled at least one perception sensor or vehicle function. A technical benefit may include that the disabled at least one perception sensor and/or associated vehicle function may be automatically (re)enabled when the equipment is unmounted from the vehicle.

Optionally in some examples, including in at least one preferred example, the equipment may be bodybuilder equipment. The (bodybuilder) equipment may for example be a snow plough, a crane, a garbage container loader, an excavator arm and bucket, an extendable/retractable outrigger, or a sweeper roller.

Optionally in some examples, including in at least one preferred example, said vehicle function may be a driver assistance function. The driver assistance function may for example be at least one of: adaptive cruise control, adaptive high beam, front collision warning, side collision warning, and automatic emergency brake. Moreover, the vehicle function may for example be an automatic door opening function.

According to a second aspect of the disclosure, there is provided a vehicle comprising the computer system according to the first aspect of the disclosure. The second aspect of the disclosure may seek to facilitate disablement of the at least one perception sensor and/or associated vehicle function when equipment is mounted on the vehicle. A technical benefit may include that the at least one perception sensor and/or associated vehicle function may be automatically disabled when equipment is mounted on the vehicle. By disabling the at least one perception sensor, energy may be saved. By disabling the vehicle function associated with the at least one perception sensor, impaired behaviour may be avoided.

Optionally in some examples, including in at least one preferred example, the vehicle may further comprise said equipment.

According to a third aspect of the disclosure, there is provided a computer-implemented method, comprising: detecting, using a camera onboard the vehicle, equipment mounted to the vehicle; determining, by processing circuitry of a computer system, that the detected equipment is within a field of view of at least one perception sensor onboard the vehicle; and in response to determining that the detected equipment is within the field of view of the at least one perception sensor, disabling at least one of the at least one perception sensor and a vehicle function associated with the at least one perception sensor. The third aspect of the disclosure may seek to facilitate disablement of the at least one perception sensor and/or associated vehicle function when equipment is mounted on the vehicle. A technical benefit may include that the at least one perception sensor and/or associated vehicle function may be automatically disabled when equipment is mounted on the vehicle. By disabling the at least one perception sensor, energy may be saved. By disabling the vehicle function associated with the at least one perception sensor, impaired behaviour may be avoided.

Optionally in some examples, including in at least one preferred example, detecting equipment mounted to the vehicle may comprise: recognizing, by at least one of the processing circuitry and the camera, the equipment mounted to the vehicle. A technical benefit may include that the equipment confidently may be detected.

Optionally in some examples, including in at least one preferred example, determining that the detected equipment is within a field of view of at least one perception sensor onboard the vehicle may comprise: comparing, by the processing circuitry, a current image area occupied by the detected equipment in at least one image from the camera with a predetermined image area; and determining, by the processing circuitry, that said current image area matches said predetermined image area. A technical benefit may include that a regular (2D) camera, for example an existing camera on the vehicle, may be used.

Optionally in some examples, including in at least one preferred example, the method may further comprise: entering a learning phase with the equipment mounted to the vehicle and the vehicle being in a controlled environment without any foreign object interfering with the at least one perception sensor; in the learning phase, monitoring, by the processing circuitry, input from the at least one perception sensor; determining, by the processing circuitry, based on the monitored input that the at least one perception sensor is detecting the equipment; and determining, by the processing circuitry, an occupied area occupied by the equipment in at least one camera image. A technical benefit may include avoiding manual setup.

Optionally in some examples, including in at least one preferred example, the method may further comprise: causing, by the processing circuitry, the equipment to move between at least two different positions relative to the vehicle; and determining, by the processing circuitry, based on the monitored input that the at least one perception sensor is detecting the equipment for each of the at least two different positions. A technical benefit may include that the at least one perception sensor and/or associated vehicle function may be disabled when the equipment is in a certain position.

Optionally in some examples, including in at least one preferred example, the method may further comprise: in response to determining that the equipment is no longer within the field of view of the at least one perception sensor, enabling at least one of the disabled at least one perception sensor or vehicle function. A technical benefit may include that the disabled at least one perception sensor and/or associated vehicle function may be automatically (re)enabled when the equipment is unmounted from the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a side view of an exemplary vehicle according to an example.
**FIG. 2** is a top view of an exemplary vehicle according to another example.
**FIG. 3** is a flow chart of an exemplary method according to an example.
**FIG. 4A** illustrates an image from a side camera according to an example.
**FIG. 4B** illustrates an image from a side camera according to another example.
**FIG. 5A** is a flow chart of an exemplary learning phase according to an example.
**FIG. 5B** schematically illustrates images from a side camera during an exemplary learning phase according to an example.
**FIG. 6** is another view of **FIG. 1****,** according to an example.
**FIG. 7** is a flow chart of an exemplary method according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Aspects of the disclosure may seek to facilitate disablement of at least one perception sensor and/or associated vehicle function when equipment is mounted on the vehicle, which equipment otherwise may impair the vehicle function. In this regard, a computer system comprising processing circuitry is configured to: detect, using a camera onboard a vehicle, the equipment mounted to the vehicle; determine that the detected equipment is within a field of view of at the least one perception sensor onboard the vehicle; and in response to determining that the detected equipment is within the field of view of the at least one perception sensor, disable at least one of the at least one perception sensor and the vehicle function associated with the at least one perception sensor. A technical benefit may include that the at least one perception sensor and/or associated vehicle function may be automatically disabled when equipment is mounted on the vehicle.

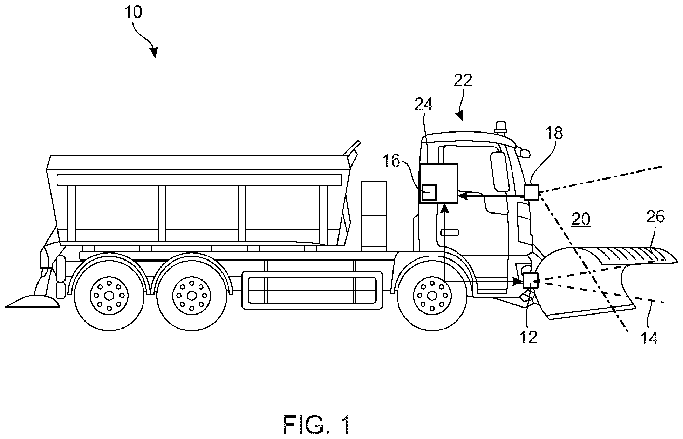

**FIG. 1** is an exemplary vehicle 10 according to an example. The vehicle 10 may be a heavy-duty vehicle, such as a truck, bus, or construction equipment, among other vehicle types.

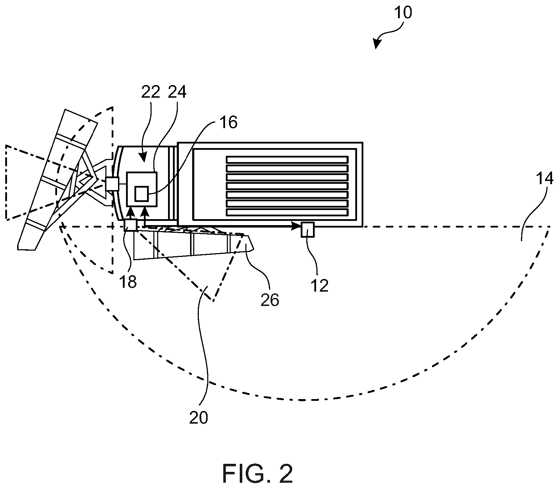

The vehicle 10 comprises at least one perception sensor 12. The at least one perception sensor 12 has a field of view 14. The field of view 14 may for example be cone-shaped. The field of view 14 may comprise an azimuth plane substantially parallel to the ground on which the vehicle 10 is situated. The at least one perception sensor 12 can generally be used to detect an object or obstacle near the vehicle 10 when the object or obstacle is within the field of view 14. The at least one perception sensor 12 may for example be a radar, a lidar, ultrasonic sensors, etc. The at least one perception sensor 12 may for example be at least one forward perception sensor (e.g. a front radar), as in **FIG. 1****.** The at least one (forward) perception sensor 12 may be mounted in the front of the vehicle 10 to detect an object or obstacle in front of the vehicle 10. In another example, the at least one perception sensor 12 may be at least one side perception sensor (e.g. a side radar), as in **FIG. 2****.** The at least one (side) perception sensor 12 may be mounted on one side of the vehicle 10 to detect an object or obstacle at that side of the vehicle 10. In yet other examples, the vehicle 10 could (also) include at least one perception sensor on the other side of the vehicle 10 and/or at least one rear perception sensor.

The vehicle 10 may further comprise a vehicle function 16 associated with the at least one perception sensor 12. The vehicle function 16 may for example be a driver assistance function. The driver assistance function may for example comprise one or more of: adaptive cruise control, adaptive high beam, front collision warning, side collision warning, and automatic emergency brake. In the case of adaptive cruise control, the vehicle function 16 may automatically adjust the speed of the vehicle 10 to maintain a safe distance from vehicles ahead based on sensor information from the at least (front) one perception sensor 12. In case of side collision warning, the vehicle function 16 may alert a driver of the vehicle 10 that a pedestrian or bicyclist or other vehicle is nearby based on sensor information from the at least one (side) perception sensor 12. The vehicle function 16 could also be an automatic door opening function.

The vehicle 10 further comprises a camera 18. The camera 18 may be adapted to capture (digital) images. The image(s) from the camera 18 may be a live view or live feed. The camera 18 may have a field of vision 20. The camera 18 may be arranged such that the camera 18 at least partly overlooks the field of view 14 of the at least one perception sensor 12. That is, the field of vision 20 of the camera 18 and the field of view 14 of the at least one perception sensor 12 may overlap. The camera 18 may for example be a fixed camera. In an alternative, the camera 18 could be a PTZ (pan-tilt-zoom) camera operating as a fixed camera. The camera 18 may for example be a forward-facing camera, as in **FIG. 1****.** The (forward-facing) camera 18 may be mounted in the front of the vehicle 10 to capture images of what is located in front of the vehicle 10. In another example, the camera 18 may be a side-facing camera, as in **FIG. 2****.** The (side-facing) camera 18 may be mounted on one side of the vehicle 10, for example in a side mirror location, to capture images of what is located at that side of the vehicle 10. In yet other examples, the vehicle 10 could (also) include a camera on the other side of the vehicle 10 and/or a rear camera. The camera(s) such as camera 18 could be included in a 360 degree bird view camera system of the vehicle 10.

The vehicle 10 may further comprise a computer system 22 comprising processing circuitry 24. In certain embodiments, the computer system may comprise processing circuitry that includes the vehicle, a backend server, another remote computer system, multiple vehicle ECUs, etc. The processing circuitry 24 may be connected to the camera 18. Moreover, the processing circuitry 24 may be connected to the at least one perception sensor 12. The aforementioned vehicle function 16 could be included in the processing circuitry 24.

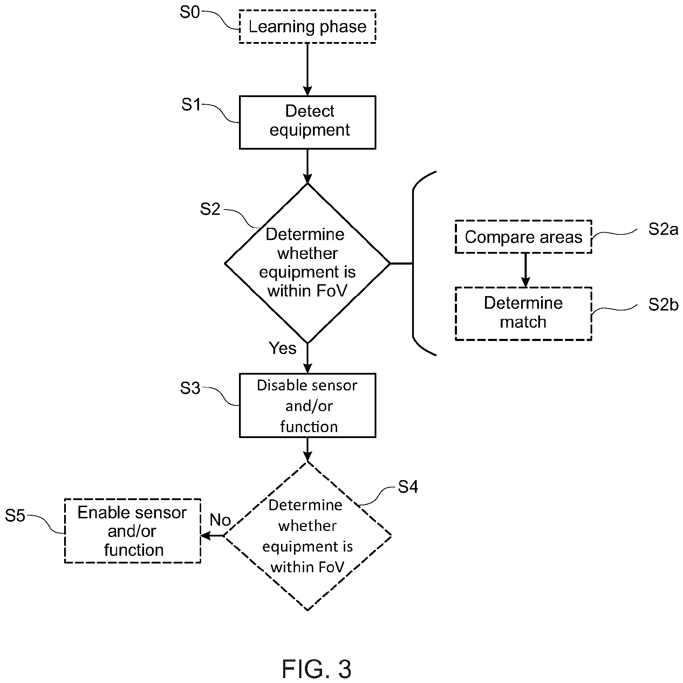

With further reference to **FIG. 3****,** which is a flow chart of an exemplary method that may correspond to operation of the computer system 22/processing circuitry 24, the processing circuitry 24 is configured the detect S1, using the camera 18 onboard the vehicle 10, equipment 26 mounted to (or on) the vehicle 10.

The equipment 26 may be bodybuilder equipment, such as a snow plough, a crane, a garbage container loader, an excavator arm and bucket, an extendable/retractable outrigger, a sweeper roller, etc. The (bodybuilder) equipment 26 may be mounted to the vehicle 10 after manufacturing of the vehicle 10. In **FIG. 1****,** the exemplary equipment 26 is front-mounted equipment, specifically a snow plough, whereby the front-mounted equipment 26 may be detected by the (forward-facing) camera 18. In FIG. 2, the exemplary equipment 26 is side-mounted equipment, specifically a snow plough, whereby the side-mounted equipment 26 may be detected by the (side-facing) camera 18. It should be noted that the vehicle 10 in **FIG. 2** may also comprise at least one front perception sensor, a forward-facing camera, and front-mounted equipment, like the vehicle 10 in **FIG. 1****.**

By detecting the equipment 26, the equipment 26 should be discerned from any other object or obstacle in the field of vision 20 of the camera 18. For example, to detect S1 the equipment 26 mounted to the vehicle 10, the processing circuitry 24 may be configured to recognize the equipment 26 mounted to the vehicle 10 in at least one image from the camera 18. In other words, to detect S 1 the equipment 26 mounted to the vehicle 10, the processing circuitry 24 may be configured to recognize an object in at least one image from the camera 18 as (bodybuilder) equipment 26 mounted to the vehicle 10. Various techniques for automatic object detection/recognition are known per se, and will not be discussed here in detail. In another example, to detect S 1 the equipment 26 mounted to the vehicle 10, the processing circuitry 24 may be configured to persistently detect the equipment 26 mounted to the vehicle 10 in images from the camera 18 for (at least) a predetermined amount of time. That is, if the processing circuitry 24 persistently detects an object in images from the camera 18 for at least the predetermined amount of time, the processing circuitry 24 assumes that the object is equipment 26, rather than say a car or pedestrian or bicyclist, without having to specifically recognize the object as equipment 26. The predetermined amount of time may for example be ≥ 30 seconds. Any other object or obstacle in the field of vision 20 of the camera 18, such as a car in front of the vehicle 10 or a pedestrian or bicyclist next to the vehicle 10, will not persist for that long. Moreover, 'persistently' may here mean that the obj ect/equipment 26 is continuously or periodically (e.g. every 1/100 sec) detected over the predetermined amount of time.

The processing circuitry 24 is further configured to determine S2 whether the detected equipment 26 is within the field of view 14 of the at least one perception sensor 12 onboard the vehicle 10. That is, processing circuitry 24 may here for example determine whether front-mounted equipment 26 may interfere with (e.g. block) the at least one forward perception sensor 12 **(****FIG. 1****),** or whether side-mounted equipment 26 may interfere with (e.g. block) the at least one side perception sensor 12 **(****FIG. 2****).**

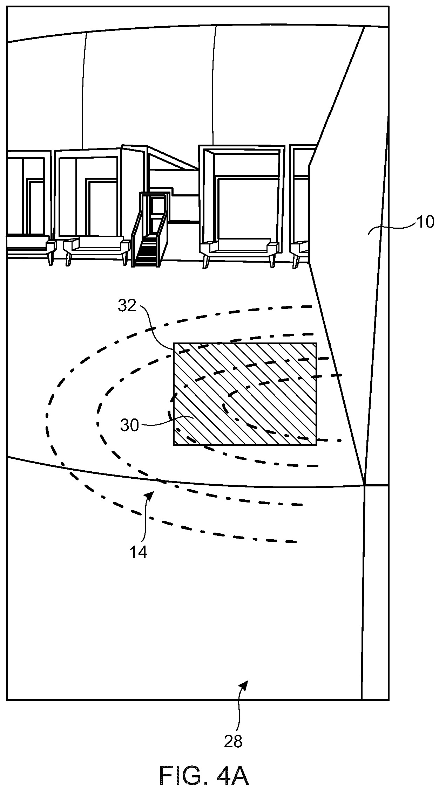

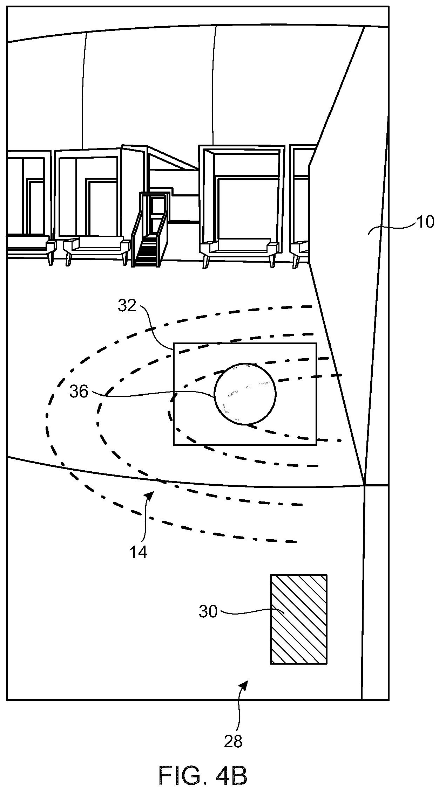

With further reference to **FIG. 4A** and **FIG. 4B****,** each showing an image 28 from a side-facing camera 18 (as in **FIG. 2****),** to determine whether the detected equipment 26 is within the field of view 14 of the at least one perception sensor 12, the processing circuitry 24 may be configured to: compare S2a a current image area 30 (currently) occupied by the detected equipment 26 in at least one image 28 from the camera 18 with a predetermined image area 32 where the equipment 26 is known to interfere with the at least one perception sensor 12 onboard the vehicle 10 (based on learning phase SO); and determine S2b whether the current image area 30 occupied by the detected equipment 26 matches the predetermined image area 32. In particular, the processing circuitry 24 may be configured to determine S2b whether the current image area 30 occupied by the detected equipment 26 matches the predetermined image area 32 with respect to shape, size, and/or position. The processing circuitry 24 may further be configured to: in response to determining that the current image area 30 occupied by the detected equipment 26 matches the predetermined image area 32 (as in **FIG. 4A****),** determine that the detected equipment 26 is within the field of view 14 of the at least one perception sensor 12; and in response to determining that the current image area 30 (occupied by the detected equipment 26) does not match any predetermined image area 32 (as in **FIG. 4B****),** determine that the detected equipment 26 is not within the field of view 14 of the at least one perception sensor 12. **FIG. 4B** also shows another object or obstacle 36, such as a pedestrian or bicyclist, within the predetermined image area 32. But that object or obstacle 36 is not detected as (bodybuilder) equipment, and is disregarded.

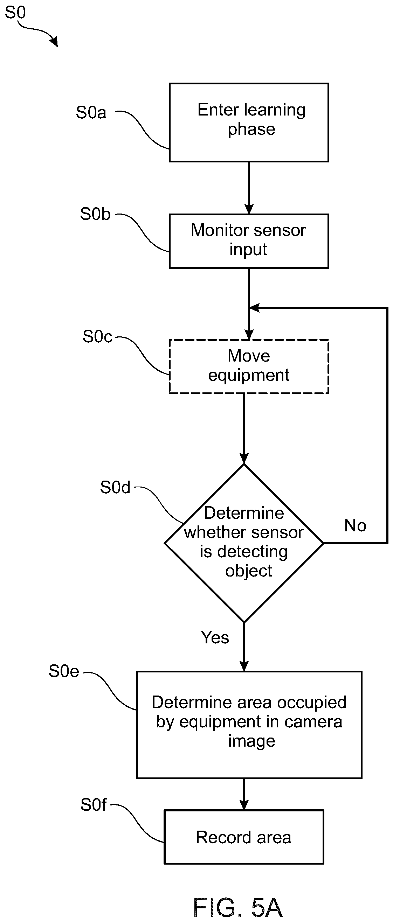

With further reference to **FIG. 5A****,** the processing circuitry 24 may be configured to predetermine at least one image area 32 where the equipment 26 is known to interfere with the at least one perception sensor 12 onboard the vehicle 10 by executing a (machine) learning phase S0. The learning phase S0 may be executed (once) before S1. Throughout the learning phase S0, the vehicle 10 should be in a controlled environment without any foreign object, such as object or obstacle 36, interfering with the at least one perception sensor 12.

Specifically, the processing circuitry 24 may be configured to enter SOa the learning phase with the equipment 26 mounted to the vehicle 10, i.e. when the equipment 26 has been mounted to the vehicle 10. The processing circuitry 24 may further be configured to, in the learning phase, monitor S0b input from the at least one perception sensor 12. The processing circuitry 24 may further be configured to determine S0d based on the monitored input whether the at least one perception sensor 12 is detecting an object. The processing circuitry 24 may further be configured to, when determining that the at least one perception sensor 12 is detecting an object (which object in the controlled environment is assumed to be the equipment 26), determine S0e an occupied area occupied by the equipment 26 in at least one camera image 28. The processing circuitry 24 may further be configured to record S0f the determined occupied area as a predetermined image area 32 where the equipment 26 is known to interfere with the at least one perception sensor 12 onboard the vehicle 10.

In the learning phase, the processing circuitry 24 may further be configured to: cause SOc the equipment 26 to move between at least two different positions relative to the vehicle 10; and determine from the monitored input whether the at least one perception sensor 12 is detecting an object for each of the at least two different positions (as part of S0d). In this way, the learning phase S0 may record a plurality of predetermined image areas 32 where the equipment 26 is known to interfere with the at least one perception sensor 12. Preferably in SOc the equipment 26 is caused to move between its full range of positions relative to the vehicle 10. Cause SOc the equipment 26 to move between at least two different positions relative to the vehicle 10 may for example include sending corresponding machine-readable instructions to an actuator arrangement of the equipment 26, or presenting corresponding user instructions on a user interface. Equipment 26 moveable between at least two different positions relative to the vehicle 10 may for example be a snow plough with adjustable height and/or angle, a crane with different deployed positions, etc.

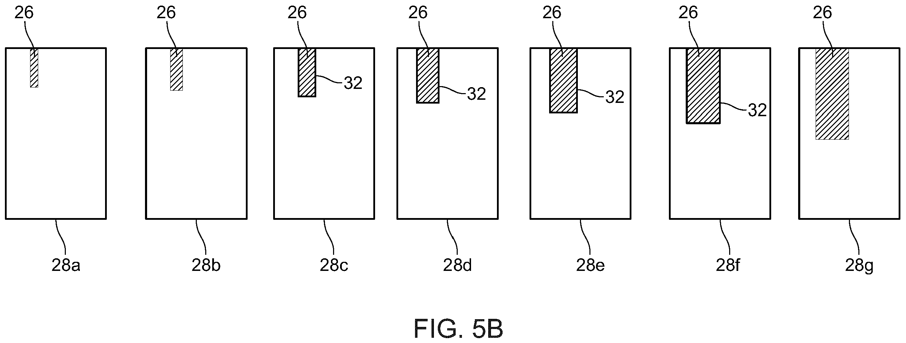

**FIG. 5B** illustrates exemplary images 28a-g from a side-facing camera 18 during the learning phase S0 when equipment 26, here a crane, is moved to (seven) different positions along the side of the vehicle 10. For images 28a-b, which show a distal end portion of the crane/equipment 26, the at least one (side) perception sensor 12 is not detecting any object. The reason for this may be that the distal end portion of the crane/equipment 26 is aft of the field of view 14 of the at least one perception sensor 12 (equipment 26 appears small, as it is further away from the camera 18). For each image 28c-f, the at least one (side) perception sensor 12 is detecting an object, whereby corresponding predetermined image areas 32 where the equipment 26 is known to interfere with the at least one perception sensor 12 are recorded. For image 28g, the at least one (side) perception sensor 12 is again not detecting any object, whereby no predetermined image area 32 is recorded. The reason for this may be that the distal end portion of the crane/equipment 26 is fore of the field of view 14 of the at least one perception sensor 12 (equipment 26 appears large, as it is closer to the camera 18).

As illustrated in **FIG. 5B****,** the predetermined image area 32 is typically a sub area of the image 28 or the view seen/captured by the camera 18. Moreover, even if the predetermined image area 32 is two dimensional, it should be appreciated at least from the example in **FIG. 5B** that by matching the current image area 28 to such a predetermined image area 32 (step S2b), it is possible to make certain assumptions as to the three dimensional positioning (including depth) of the equipment 26 relative to the vehicle 10.

It should be noted that the at least one predetermined image area 32 recorded in the learning phase S0 may be transmitted to another similar vehicle that has the same bodybuilder equipment mounted in the same position as the equipment 26 on the vehicle 10. Likewise, the processing circuitry 24 could be configured to receive at least one predetermined image area 32 recorded for another similar vehicle that has the same bodybuilder equipment mounted in the same position as the equipment 26 on the vehicle 10, whereby the learning phase S0 for equipment 26 on vehicle 10 could be omitted.

Returning to **FIG. 3****,** the processing circuitry 24 is further configured to: in response to determining that the detected equipment 26 is within the field of view 14 of the at least one perception sensor 12, disable at least one of the at least one perception sensor 12 and the vehicle function 16 associated with the at least one perception sensor 12. On the other hand, if the processing circuitry 24 at S2 determines that the detected equipment 26 is not within the field of view 14 of the at least one perception sensor 12, like in **FIG. 4B****,** the at least one perception sensor 12 and the associated vehicle function 16 may remain on/enabled.

The processing circuitry 24 may further be configured to: following S3 and in response to determining S4 that the equipment 26 is no longer within the field of view 14 of the at least one perception sensor 12, (re)enable S5 the disabled at least one perception sensor 12 and/or vehicle function 16. This may for example happen if the equipment 26 is unmounted (removed) from the vehicle 10, or if the equipment 26 is moved to a position where the equipment 26 is not within the field of view 14 of the at least one perception sensor 12. Determining that the equipment 26 is no longer within the field of view 14 of the at least one perception sensor 12 may for example include determining that the current image area 30 occupied by the detected equipment 26 no longer matches any predetermined image area 32, or determining that the equipment 26 is no longer detected at all.

Following S5, the at least one perception sensor 12 and/or vehicle function 16 could again be disabled by repeating S1-S3, for example if the equipment 26 is re-mounted or re-deployed, notably without having to repeat the learning phase S0.

Moreover, in case the processing circuitry 24 detects, using the camera 18 onboard the vehicle 10, other (second) equipment mounted to the vehicle 10, wherein the other equipment is different from the (first) equipment 26, the processing circuitry 24 may be configured to determine whether the detected other equipment is within the field of view 14 of the at least one perception sensor 12 onboard the vehicle 10 based on the predetermined image area 32 where the first equipment 26 is known to interfere with the at least one perception sensor 12, i.e. again without having to repeat the learning phase S0. Here, the other (second) detected equipment should be similar to the (first) detected equipment 26, such as having substantially the same size or being of the same type.

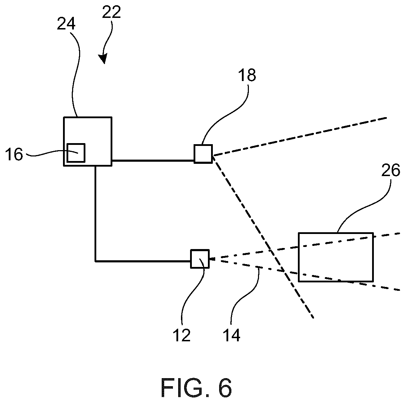

**FIG. 6** is another view of **FIG. 1****,** according to an example. **FIG. 6** illustrates computer system 22 comprising processing circuitry 24 configured to: detect, using camera 18 onboard a vehicle, equipment 26 mounted to the vehicle; determine that the detected equipment 26 is within a field of view 14 of at least one perception sensor 12 onboard the vehicle; and in response to determining that the detected equipment 26 is within the field of view 14 of the at least one perception sensor 12, disable at least one of the at least one perception sensor 12 and a vehicle function 16 associated with the at least one perception sensor 12.

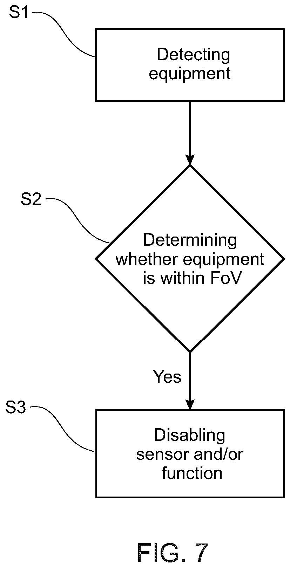

**FIG. 7** is a flow chart of a computer-implemented method according to an example. The method comprises: detecting S 1, using camera 18 onboard vehicle 10, equipment 26 mounted to the vehicle 10; determining S2, by processing circuitry 24 of a computer system 22, that the detected equipment 26 is within the field of view 14 of at least one perception sensor 12 onboard the vehicle; and in response to determining that the detected equipment 26 is within the field of view 14 of the at least one perception sensor 12, disabling S3 at least one of the at least one perception sensor 12 and vehicle function 16 associated with the at least one perception sensor 12.

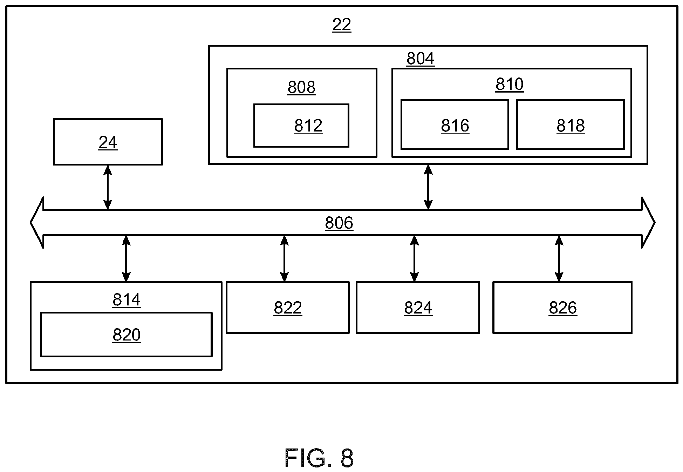

**FIG. 8** is a schematic diagram of a computer system **22** for implementing examples disclosed herein. The computer system **22** is adapted to execute instructions from a computer-readable medium to perform these and/or any of the functions or processing described herein. The computer system **22** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **22** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **22** may comprise at least one computing device or electronic device capable of including firmware, hardware, and/or executing software instructions to implement the functionality described herein. The computer system **22** may include processing circuitry **24** (e.g., processing circuitry including one or more processor devices or control units), a memory **804,** and a system bus **806.** The computer system **22** may include at least one computing device having the processing circuitry **24.** The system bus **806** provides an interface for system components including, but not limited to, the memory **804** and the processing circuitry **24.** The processing circuitry **24** may include any number of hardware components for conducting data or signal processing or for executing computer code stored in memory **804.** The processing circuitry **24** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **24** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **24** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **24.** A basic input/output system (BIOS) **812** may be stored in the non-volatile memory **808** and can include the basic routines that help to transfer information between elements within the computer system **22.**

The computer system **22** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **24** to carry out actions described herein. Thus, the computer-readable program code of the computer program **820** can comprise software instructions for implementing the functionality of the examples described herein when executed by the processing circuitry **24.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **24.** The processing circuitry **24** may serve as a controller or control system for the computer system **22** that is to implement the functionality described herein.

The computer system **22** may include an input device interface **822** configured to receive input and selections to be communicated to the computer system **22** when executing instructions, such as from a keyboard, mouse, touch-sensitive surface, etc. Such input devices may be connected to the processing circuitry **24** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **22** may include an output device interface **824** configured to forward output, such as to a display, a video display unit (e.g., a liquid crystal display (LCD) or a cathode ray tube (CRT)). The computer system **22** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: detect, using a camera onboard a vehicle, equipment mounted to the vehicle; determine that the detected equipment is within a field of view of at least one perception sensor onboard the vehicle; and in response to determining that the detected equipment is within the field of view of the at least one perception sensor, disable at least one of the at least one perception sensor and a vehicle function associated with the at least one perception sensor.

Example 2: The computer system of example 1, wherein to detect equipment mounted to the vehicle, the processing circuitry is further configured to recognize the equipment mounted to the vehicle.

Example 3: The computer system of any of examples 1-2, wherein to detect equipment mounted to the vehicle, the processing circuitry is further configured to persistently detect the equipment mounted to the vehicle for a predetermined amount of time.

Example 4: The computer system of any of examples 1-3, wherein to determine that the detected equipment is within a field of view of at least one perception sensor onboard the vehicle, the processing circuitry is further configured to: compare a current image area occupied by the detected equipment in at least one image from the camera with a predetermined image area; and determine that said current image area matches said predetermined image area.

Example 5: The computer system of example 4, wherein the processing circuitry is further configured to: in response to determining that said current image area matches said predetermined image area, determine that the detected equipment is within the field of view of the at least one perception sensor.

Example 6: The computer system of any of examples 4-5, wherein the processing circuitry is further configured to: enter a learning phase with the equipment mounted to the vehicle; in the learning phase, monitor input from the at least one perception sensor; determine based on the monitored input that the at least one perception sensor is detecting an object; and determine an occupied area occupied by the equipment in at least one camera image.

Example 7: The computer system of example 6, wherein the processing circuitry is further configured to: cause the equipment to move between at least two different positions relative to the vehicle; and determine from the monitored input that the at least one perception sensor is detecting an object for each of the at least two different positions.

Example 8: The computer system of any of examples 4-7, wherein said equipment is first equipment, and wherein the processing circuitry is further configured to: detect, using the camera onboard the vehicle, second equipment mounted to the vehicle, wherein the second equipment is different from the first equipment; and determine that the detected second equipment is within the field of view of the at least one perception sensor onboard the vehicle based on a predetermined image area where the first equipment is known to interfere with the at least one perception sensor onboard the vehicle.

Example 9: The computer system of any of examples 1-8, wherein the processing circuitry is further configured to: in response to determining that the equipment is no longer within the field of view of the at least one perception sensor, enable at least one of the disabled at least one perception sensor or vehicle function.

Example 10: The computer system of any of examples 1-9, wherein the equipment is bodybuilder equipment.

Example 11. The computer system of any of examples 1-10, wherein said vehicle function is a driver assistance function.

Example 12: A vehicle comprising the computer system of any of examples 1-11.

Example 13: A computer-implemented method, comprising: detecting, using a camera onboard the vehicle, equipment mounted to the vehicle; determining, by processing circuitry of a computer system, that the detected equipment is within a field of view of at least one perception sensor onboard the vehicle; and in response to determining that the detected equipment is within the field of view of the at least one perception sensor, disabling at least one of the at least one perception sensor and a vehicle function associated with the at least one perception sensor.

Example 14: The method of example 13, wherein detecting equipment mounted to the vehicle comprises: recognizing, by at least one of the processing circuitry and the camera, the equipment mounted to the vehicle.

Example 15: The method of any of examples 13-14, wherein determining that the detected equipment is within a field of view of at least one perception sensor onboard the vehicle comprises: comparing, by the processing circuitry, a current image area occupied by the detected equipment in at least one image from the camera with a predetermined image area; and determining, by the processing circuitry, that said current image area matches said predetermined image area.

Example 16: The method of example 15, further comprising: entering a learning phase with the equipment mounted to the vehicle and the vehicle being in a controlled environment without any foreign object interfering with the at least one perception sensor; in the learning phase, monitoring, by the processing circuitry, input from the at least one perception sensor; determining, by the processing circuitry, based on the monitored input that the at least one perception sensor is detecting the equipment; and determining, by the processing circuitry, an occupied area occupied by the equipment in at least one camera image.

Example 17: The method of example 16, further comprising: causing, by the processing circuitry, the equipment to move between at least two different positions relative to the vehicle; and determining, by the processing circuitry, based on the monitored input that the at least one perception sensor is detecting the equipment for each of the at least two different positions.

Example 18: The method of any of examples 13-17, further comprising: in response to determining that the equipment is no longer within the field of view of the at least one perception sensor, enabling at least one of the disabled at least one perception sensor or vehicle function.

Example 19: A computer program product comprising program code for performing, when executed by the processing circuitry, the method of any of examples 13-18.

Example 20: A non-transitory computer-readable storage medium comprising instructions, which when executed by the processing circuitry, cause the processing circuitry to perform the method of any of examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
detect, using a camera onboard a vehicle, equipment mounted to the vehicle;
determine that the detected equipment is within a field of view of at least one perception sensor onboard the vehicle; and
in response to determining that the detected equipment is within the field of view of the at least one perception sensor, disable at least one of the at least one perception sensor and a vehicle function associated with the at least one perception sensor.

2. The computer system of claim 1, wherein to detect equipment mounted to the vehicle, the processing circuitry is further configured to recognize the equipment mounted to the vehicle.

3. The computer system of any of claims 1-2, wherein to detect equipment mounted to the vehicle, the processing circuitry is further configured to persistently detect the equipment mounted to the vehicle for a predetermined amount of time.

4. The computer system of any of claims 1-3, wherein to determine that the detected equipment is within a field of view of at least one perception sensor onboard the vehicle, the processing circuitry is further configured to:
compare a current image area occupied by the detected equipment in at least one image from the camera with a predetermined image area; and
determine that said current image area matches said predetermined image area.

5. The computer system of claim 4, wherein the processing circuitry is further configured to: in response to determining that said current image area matches said predetermined image area, determine that the detected equipment is within the field of view of the at least one perception sensor.

6. The computer system of any of claims 4-5, wherein the processing circuitry is further configured to:
enter a learning phase with the equipment mounted to the vehicle;
in the learning phase, monitor input from the at least one perception sensor;
determine based on the monitored input that the at least one perception sensor is detecting an object; and
determine an occupied area occupied by the equipment in at least one camera image.

7. The computer system of claim 6, wherein the processing circuitry is further configured to:
cause the equipment to move between at least two different positions relative to the vehicle; and
determine from the monitored input that the at least one perception sensor is detecting an object for each of the at least two different positions.

8. The computer system of any of claims 4-7, wherein said equipment is first equipment, and wherein the processing circuitry is further configured to:
detect, using the camera onboard the vehicle, second equipment mounted to the vehicle, wherein the second equipment is different from the first equipment; and
determine that the detected second equipment is within the field of view of the at least one perception sensor onboard the vehicle based on a predetermined image area where the first equipment is known to interfere with the at least one perception sensor onboard the vehicle.

9. The computer system of any of claims 1-8, wherein the processing circuitry is further configured to: in response to determining that the equipment is no longer within the field of view of the at least one perception sensor, enable at least one of the disabled at least one perception sensor or vehicle function.

10. The computer system of any of claims 1-9, wherein the equipment is bodybuilder equipment.

11. The computer system of any of claims 1-10, wherein said vehicle function is a driver assistance function.

12. A vehicle comprising the computer system of any of claims 1-11.

13. A computer-implemented method, comprising:
detecting, using a camera onboard the vehicle, equipment mounted to the vehicle;
determining, by processing circuitry of a computer system, that the detected equipment is within a field of view of at least one perception sensor onboard the vehicle; and
in response to determining that the detected equipment is within the field of view of the at least one perception sensor, disabling at least one of the at least one perception sensor and a vehicle function associated with the at least one perception sensor.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
